# EUROPEAN PATENT APPLICATION

(11) **EP 1 916 862 A1**
(43) Date of publication of application: **30.04.2008**
(21) Application number: 07020217.1
(22) Date of filing: 16.10.2007
(51) Int. Cl.: H04Q 7/38

(54) **Method for informing a mobile station in a broadband wireless communication system of a cause for the received status information**

(30) Priority: 25.10.2006 KR 20060104064
(71) Applicant: Samsung Electronics Co., Ltd., Suwon-si, Gyeonggi-Do (KR)
(72) Inventor: Kim, Yong-Rock, Seocho-gu Seoul (KR)
(74) Representative: Harrison Goddard Foote

(57) **Abstract**

Provided is a method for performing a ranging process in a broadband wireless communication system. In the method, a ranging request message (405) is transmitted from a mobile station to a base station. A ranging response message (407) including cause information of a ranging status is transmitted from the base station to the mobile station.

## Description

### CROSS-REFERENCE TO RELATED APPLICATION(S) AND CLAIM OF PRIORITY

The present application claims priority under 35 U.S.C. § 119 to an application filed in the Korean Intellectual Property Office on October 25, 2006 and allocated Serial No. 2006-104064, the contents of which are incorporated herein by reference.

### TECHNICAL FIELD OF THE INVENTION

The present application relates generally to a method for performing a ranging process in a broadband wireless communication system, and in particular, to a method for coping with a ranging error in a broadband wireless communication system.

### BACKGROUND OF THE INVENTION

A Wireless Broadband (WiBro) system is based on the Institute of Electrical and Electronics Engineers (IEEE) 802.16e system and aims at providing a mobile broadband wireless communication system. However, an error may occur in a ranging process between a mobile station (MS) and a base station (BS) in the IEEE 802.16e system.

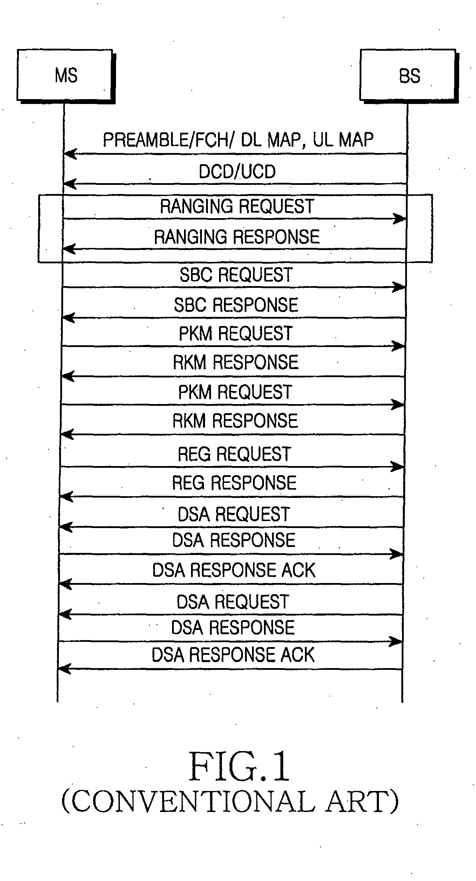

FIGURE 1 illustrates a normal network entry process between a mobile station (MS) and a base station (BS). An initial ranging process will be described with reference to FIGURE 1.

Referring to FIGURE 1, the BS transmits a preamble, a frame control header (FCH), a downlink (DL) MAP, and an uplink (UL) MAP to the MS . Also, the BS transmits downlink channel descriptor/uplink channel descriptor (DCD/UCD) messages to the MS. A detailed description of the preamble and the UCD/DCD message is not provided herein. From the messaged received from the BS, the MS obtains UL channel characteristic information and parameters related to an initial ranging process.

Thereafter, the MS transmits a ranging request message to the BS. In response to the ranging request message, the BS transmits a ranging response message to the MS. Upon receipt of the ranging response message, the MS performs the remaining network entry operation to access the BS. Examples of the remaining network entry process include a basic capability negotiation process, an authentication process, and a registration process.

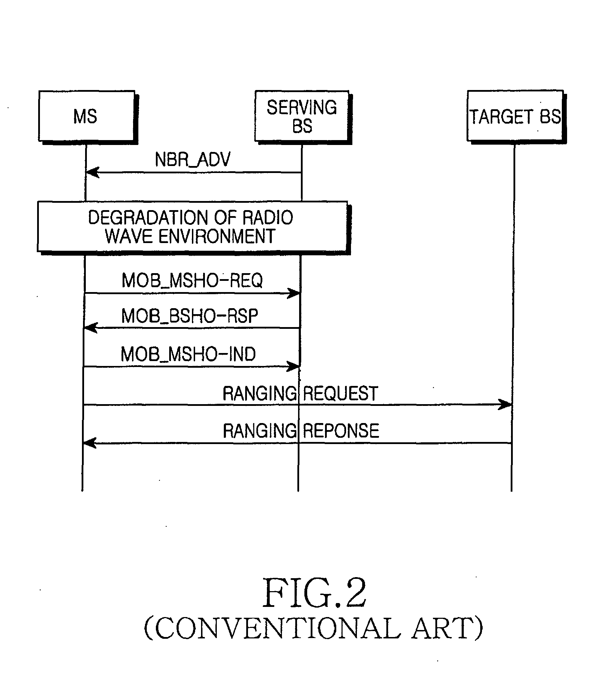

FIGURE 2 illustrates a conventional handover ranging process between a mobile station (MS) and a base station (BS). The handover ranging process will be described with reference to FIGURE 2.

Referring to FIGURE 2, an MS exchanges Media Access Control (MAC) management messages such as MOB_MSHO-REQ, MOB_BSHO-RSP, MOB_BSHO-REQ, and MOB_HO-IND with a serving BS for a handover from the serving BS to a target BS. The above messages include new BS information, which are used for a transition (handover) of the MS from the serving BS to the target BS. The MS exchanges a ranging request message and a ranging response message with the target BS to perform a handover to the target BS.

A UL MAP is used as a portion of control information included in a DL link frame transmitted from the BS to the MS. The UL MAP is used to allocate resources for a UL message and UL traffic to be transmitted by the MS, and includes information for enabling the MS to demodulate the UL message and the UL traffic.correctly. The UL MAP has a data format of information element (IE). The serving BS is a BS that is currently providing a service to the MS, which is also called 'source BS'. The target BS is a new BS to which the MS will transition through a handover process. Recommended BSs are BSs other than the serving BS to which the MS can move through a handover process, among parameters to be transmitted from the serving BS to the MS. Ranging is a process in which the MS obtains parameters (e.g., a time offset and a frequency offset) necessary for UL transmission to the BS . The MOB_MSHO-REQ is a MAC layer message that is used to transmit neighbor BS information, which is measured by the MS, from the MS to the serving BS in order to perform a handover to another BS. The MOB_BSHO-REQ is a MAC layer message that is transmitted from the serving BS to induce a handover operation of the MS. The MOB_BSHO-RSP is a response message that is transmitted from the serving BS to the MS in response to the MOB_MSHO-REQ message of the MS, which includes the parameters of the recommended BSs. The MOB_MSHO-IND is a UL message that is used to transmit information of the target BS from the MS to the serving BS. NBR_ADV is a broadcast message that is periodically transmitted from the BS to all MSs within the coverage of the BS to inform the corresponding MS of a neighbor BS list of the corresponding BS.

However, when channel conditions are poor, the MS may fail to receive a ranging response message from the BS in the handover ranging process, which is called 'occurrence of a ranging error'.

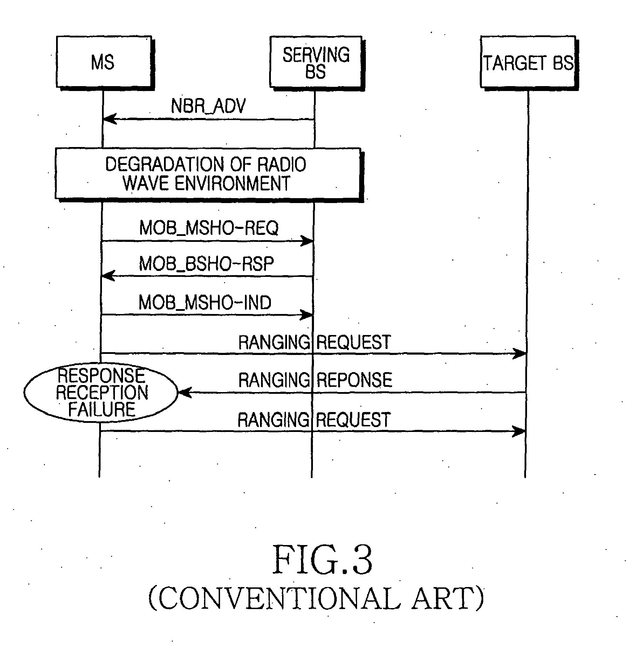

FIGURE 3 illustrates the occurrence of a handover ranging error. The occurrence of a ranging error in a handover ranging process will be described with reference to FIGURE 3.

Referring to FIGURE 3, a serving BS periodically transmits an NBR_ADV message to an MS to inform the MS of a list of neighbor BSs around the serving BS. When the radio wave environment of the serving BS is degraded, the MS transmits an MOB_MSHO-REQ message to the serving BS in order to detect a BS with a better radio wave environment. Upon receipt of the MOB_MSHO-REQ message, the serving BS transmits an MOB_BSHO-RSP message to the MS to report a recommended BS to the MS. When a target BS has a better radio wave environment than the serving BS, the MS transmits an MOB_MSHO-IND message to the serving BS to attempt a transition (i.e., handover) to the target BS. Thereafter, the MS transmits a ranging request message to the target BS to inform the target BS which BS it has moved from. Upon receipt of the ranging request message, the target BS transmits a ranging response message to the MS in order to inform the MS of new connection information. However, when channel conditions are poor, the MS fails to receive the ranging response message from the target BS, causing the occurrence of a ranging error.

For reference, the ranging process of the MS will be described in detail with reference to Tables 1 through 5.

Table 1 shows a bandwidth request header format for the ranging process of the MS.

**Table 1**

| HT (1bit) | EC (1 bit) | Type (3 bit) | BR MSB (11 bit) | |
|---|---|---|---|---|
| BR LSB (8 bit) | | | | CID MSB (8 bit) |
| CID LSB (8 bit) | | | | HCS (8 bit) |
| | | | | |

Table 2 shows a bandwidth request header field in detail.

**Table 2**

| Name | Length (bit) | Description |
|---|---|---|
| HT | 1 | Header Type = 1 |
| EC | 1 | Encryption. Always to zero |
| Type | 3 | Type of Bandwidth Request Header |
| BR | 19 | Bandwidth Request |
| | | Number of bytes of uplink bandwidth to be allocated to MS |
| CID | 16 | Connection Identifier |
| HCS | 8 | Header Check Sequence |

Table 3 shows a MAC management message format.

**Table 3**

| | |
|---|---|
| Management Message Type | Management Message Payload |

Table 4 shows a MAC management message.

**Table 4**

| Type | Message Name | Message Description |
|---|---|---|
| 0 | UCD | Uplink Channel Descriptor |
| 1 | DCD | Downlink Channel Descriptor |
| 2 | DL-MAP | Downlink Access Definition |
| 3 | UL-MAP | Uplink Access Definition |
| 4 | RNG-REQ | Ranging Request |
| 5 | RNG-RSP | Ranging Response |

Table 5 shows a conventional ranging response message format.

**Table 5**

| Syntax | Size | Notes |
|---|---|---|
| RNG-RSP_Message_Format( ) { | | |
| Management Message Type = 5 | 8 bits | |
| Uplink Channel ID | 8 bits | |
| TLV Encoded Information | Variable | TLV specific |
| } | | |

As can be seen from FIGURES 1 through 3, there was no function to transmit a Negative ACKnowledgement (NACK) signal for an invalid operation from the BS to the MS when the MS receives the ranging response message from the BS after transmission of the ranging request message to the BS. For example, when the BS treats the transmission of the ranging response message as a failure after the repeated retransmission of the ranging response message, the MS cannot know the transmission failure and thus transmits the ranging request message to the BS repeatedly. This leads to the inefficient repeated occupation of UL resources.

### SUMMARY OF THE INVENTION

To address the above-discussed deficiencies of the prior art, it is a primary object of the present invention to substantially solve at least the above problems and/or disadvantages and to provide at least the advantages below. Accordingly, an object of the present invention is to provide a method for coping with an error in a mobile station (MS) ranging process.

Another obj ect of the present invention is to provide a method for efficiently using the resources of a base station (BS) by transmitting a ranging response message suitable for the conditions of the BS from the BS to an MS when the MS transmits a ranging request message to the BS.

Still another object of the present invention is to provide a method for successfully performing an initial ranging process of an MS by allowing a BS to inform the MS of an error in the initial ranging process and the cause of the error so that the MS can cope with the error.

Yet another object of the present invention is to provide a method for smoothly performing a handover process of an MS by allowing a BS to inform the MS of the type of an error in the handover process so that the MS can cope with the error suitably.

According to one aspect of the present invention, a method for performing a ranging process in a broadband wireless communication system includes the steps of: transmitting a ranging request message from an MS to a BS; and transmitting a ranging response message including cause information of a ranging status from the BS to the MS.

According to another aspect of the present invention, a communication method for a BS in a broadband wireless communication system includes the steps of: determining if a ranging request message is received from an MS; determining ranging status information and cause information of the ranging status information upon receipt of the ranging request message; generating a ranging response message including the ranging status information and the cause information; and transmitting the generated ranging response message to the MS.

According to still another aspect of the present invention, a communication method for an MS in a broadband wireless communication system includes the steps of: transmitting a ranging request message to a BS; and receiving a ranging response message including cause information of a ranging status from the BS.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 illustrates a normal network entry process between an MS and a BS;

FIGURE 2 illustrates a conventional handover ranging process between an MS and a BS;

FIGURE 3 illustrates the occurrence of a handover ranging error;

FIGURE 4 illustrates an operation of a BS according to the present invention when an initial ranging error occurs;

FIGURE 5 illustrates an operation of a BS according to the present invention when a handover ranging error occurs; and

FIGURE 6 illustrates an operation of an MS for coping with each ranging error according to the present invention.

### DETAILED DESCRIPTION OF THE INVENTION

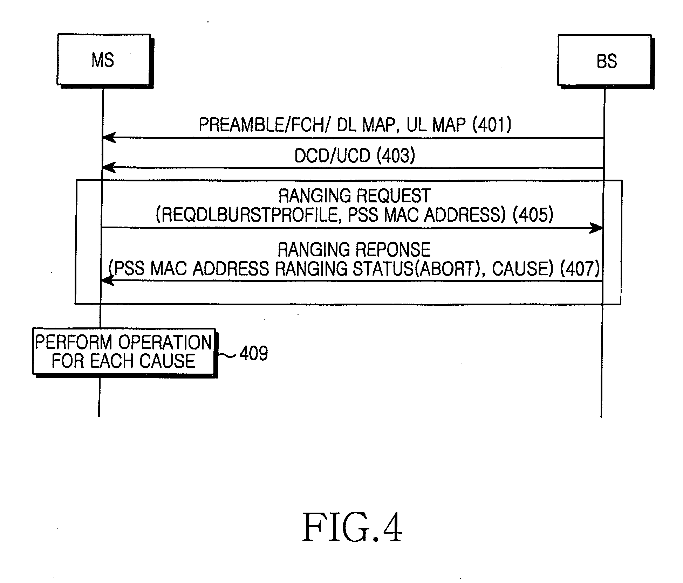

FIGURES 4 through 6, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communication system.

Preferred embodiments of the present invention will be described herein below with reference to the accompanying drawings. In the following description, well-known functions or constructions are not described in detail since they would obscure the invention in unnecessary detail.

The present invention is intended to provide a variety of Negative ACKnowledgement (NACK) functions for a ranging response message in a ranging process in a broadband wireless communication system.

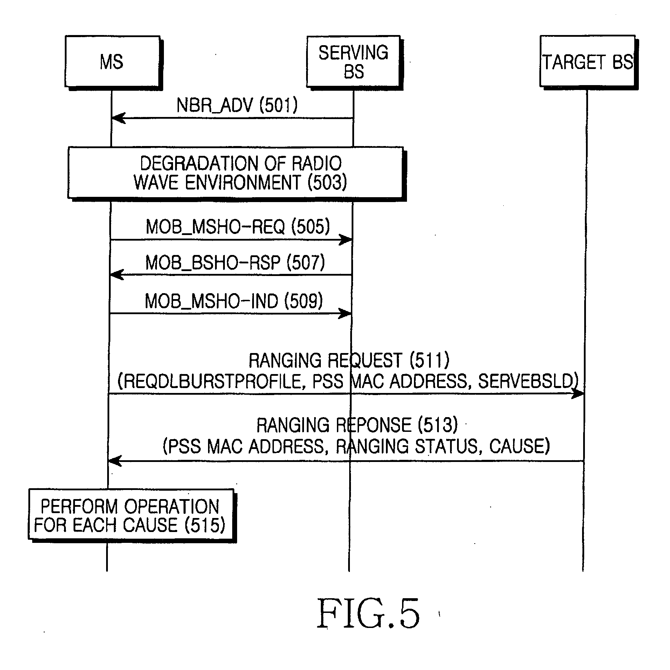

FIGURES 4 and 5 illustrate a call processing scenario in which a NACK function is provided when an error occurs in a ranging process (i.e., an initial ranging process or a handover ranging process). The call processing scenario of FIGURES 4 and 5 may be implemented using a conventional ranging status parameter defined in Table 6 and a cause parameter proposed in the present invention.

Table 6 shows the details (Type, Length, and Value) of the ranging status parameter and the cause parameter, i.e., the parameters for providing a NACK function for a ranging response message of FIGs. 4 and 5.

**Table 6**

| Name | Type | Length | Value |
|---|---|---|---|
| Ranging Status | 4 | 1 | Used to indicate whether uplink message is received within acceptable limits by BS |
| | | | 1 = continue, 2 = abort, 3 = success |
| Cause | 40 | 1 | 0 = out of resource |
| | | | 1 = busy |
| | | | 2 = invalid parameter |
| | | | 3 = out of service |
| | | | 4~255 = reserved |

The NACK function for the ranging response message will be described in detail with reference to Table 6.

Referring to Table 6, there is a first case where a BS cannot allocate a corresponding frequency band (frequency allocation (FA)) to an MS in response to a ranging request message from the MS because all radio resources for the frequency band (FA) that is requested by the MS are already occupied. In this case, the BS sets the value of a 'ranging status' parameter of a ranging response message to 'abort', and the value of a 'cause' parameter to 'out of resource'. Thus, upon receipt of the ranging response message from the BS, the MS detects that there is no available radio resource for the corresponding frequency band (FA). Accordingly, the MS does not continue to transmit the ranging request message to the BS but transmits a ranging request message for requesting another frequency band (FA) to the BS.

There is a second case where it is difficult to allocate resources to a new MS in response to a ranging request message from the MS, because all resources of a BS (e.g., frequencies, radio resources of a frequency band, and IP resources) are exhausted. In this case, the BS sets the value of a 'ranging status' parameter of a ranging response message to 'abort', and the value of a 'cause' parameter to 'out of service'. Thus, upon receipt of the ranging response message from the BS, the MS detects that the BS are short of resources. Accordingly, the MS does not continue to transmit the ranging request message to the BS but transmits a ranging request message to another BS.

There is a third case where a BS is in the process of performing another operation on an MS when the MS transmits a ranging request message to the BS. For example, while the BS is to transmit a ranging response message to the MS, the MS retransmits the ranging request message to the BS, determining that a ranging response message fails to be received due to a ranging response wait timer. In this case, the BS sets the value of a 'ranging status' parameter of the ranging response message to 'continue', and the value of a 'cause' parameter to 'busy'. Thus, upon receipt of the ranging response message from the BS, the MS detects that the BS is in the process of another operation on the MS. Accordingly, the MS updates the ranging response wait timer and waits to receive a ranging response message from the BS. Thereafter, when failing to receive the ranging response message, the MS retransmits the ranging request message to the BS.

There is a fourth case where a BS determines that there is an invalid parameter in a ranging request message received from an MS. In this case, the BS sets the value of a 'ranging status' parameter of a ranging response message to `continue' , and the value of a 'cause' parameter to 'invalid parameter'. Thus, upon receipt of the ranging response message from the BS, the MS detects that there is an invalid parameter in the ranging request message. Accordingly, the MS corrects the invalid parameter and retransmits the ranging request message to the BS.

Hereinafter, exemplary embodiments of the present invention will be described in detail with reference to FIGURES 4 through 6.

FIGURE 4 illustrates an initial ranging process in a broadband wireless communication system according to an embodiment of the present invention.

Referring to FIGURE 4, an MS receives a DL preamble from a BS to acquire system synchronization and also receives a frame control header (FCH) message, a DL MAP, and a UL MAP message from the BS (in step 401). At this point, the MS analyzes the DL/UL MAP messages to detect resources of DCD/UCD messages.

Thereafter, the MS receives DCD/UCD messages from the BS using the detected resources (in step 403). At this point, the MS obtains DL channel information, UL channel information, and initial ranging parameters from the DCD/UCD messages.

The MS can perform a basic entry process for the BS using the minimum UL/DL channel information obtained from the BS. Thus, the MS transmits a ranging request message to the BS (in step 405).

Thereafter, the BS transmits a ranging response message to the MS in response to the ranging request message (in step 407). According to the present invention, the ranging response message includes ranging status information and cause information as shown in Table 6.

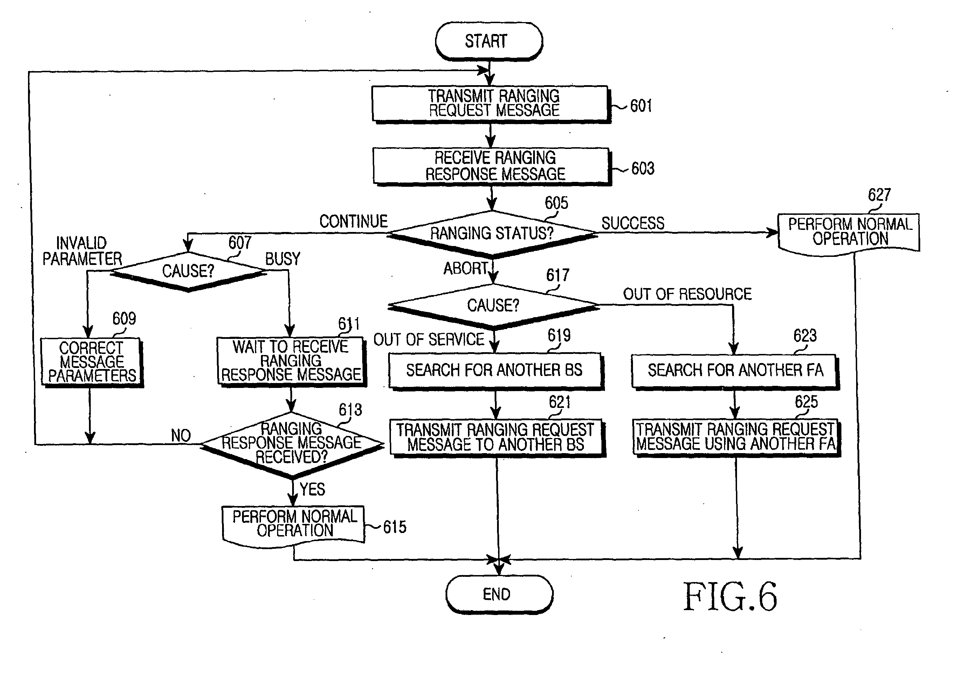

Thereafter, the MS analyzes the ranging response message, detects a ranging status and a cause according to the ranging status, and operates an operation according to the detected cause (in step 409) . The operation according to the detected cause will be described later in detail with reference to FIGURE 6.

FIGURE 5 illustrates a handover ranging process in a broadband wireless communication system according to an embodiment of the present invention.

Referring to FIGURE 5, an MS receives from a serving station a neighbor advertisement (NBR_ADV) message including information of neighbor BSs (in step 501).

Thereafter, based on the information of the neighbor advertisement message, the MS scans the neighbor BSs and detects that the radio wave environment between it and the serving BS is degraded (in step 503). That is, the MS detects the need of a handover.

Thus, the MS transmits a handover request (MOB_MSHO-REQ) message to the serving BS (in step 505).

In response to the handover request message received from MS, the serving BS transmits a ranging response (MOB_MSHO-RSP) message to the MS (in step 507). The handover response message includes a list of handover candidate BSs to be recommended to the MS.

Thereafter, the MS determines a handover target BS and transmits a handover indication (MOB_MSHO-IND) message including information of the target BS to the serving BS (in step 509).

Upon final determination of a handover, the MS transmits a handover ranging request message to the target BS (in step 511).

In response to the ranging request message received from the MS, the target BS transmits a ranging response message to the MS (in step 513). According to the present invention, the ranging response message includes ranging status information and cause information of the ranging status as shown in Table 6.

Thereafter, the MS analyzes the ranging response message, detects a ranging status and a cause according to the ranging status, and operates an operation according to the detected cause (in step 515). The operation according to the detected cause will be described later in detail with reference to FIGURE 6.

Although the initial ranging process and the handover ranging process have been described with reference to FIGURES 4 and 5, the present invention is also applicable to a location update ranging process.

FIGURE 6 illustrates an operation of an MS in a broadband wireless communication system according to an embodiment of the present invention.

Referring to FIGURE 6, an MS transmits a ranging request message to a BS in step 601. The ranging request message is a message that is transmitted to the BS for initial ranging, handover ranging, or location update ranging.

In step 603, the MS receives a ranging response message from the BS. According to the present invention, the ranging response message includes ranging status information and cause information of the ranging status as shown in Table 6.

In step 605, the MS analyzes the ranging response message and determines if ranging status information in the ranging response message is 'continue'.

If the ranging status information is 'continue' (in step 605), the MS detects the cause information of the ranging status ('continue') in step 607.

If the cause information is 'invalid parameter' (in step 607), the MS corrects parameters of the ranging request message in step 609. Thereafter, the MS returns to step 601 in order to retransmit the ranging request message.

On the other hand, if the cause information is 'busy' (in step 607), the MS updates a ranging response wait timer and waits to receive a ranging response message during the operation of the timer, in step 611.

In step 613, the MS determines if the ranging response message is received. If the ranging response message is not received (in step 613), the MS returns to step 610 in order to retransmit the ranging request message.

If the ranging response message is received (in step 613), the MS performs the remaining network entry (or reentry) operation in step 615.

Meanwhile, if the ranging status information is 'abort' (in step 605), the MS detects the cause information of the ranging status ('abort) in step 617.

If the cause information is 'out of service' (in step 617), the MS searches for another BS in step 619. In step 621, the MS transmits a ranging request message to the other BS.

On the other hand, if the cause information is 'out of resource' (in step 617), the MS searches for another FA of the BS in step 623. In step 625, the MS transmits a ranging request message to the BS using the other FA.

Meanwhile, if the ranging status information is 'success' (in step 605), the MS performs the remaining network entry (or reentry) operation in step 627.

As described above, the present invention provides four NACK functions for the ranging response message, thereby making it possible for the MS to cope with the ranging error suitably.

Also, the present invention informs the MS of an error in the ranging process, thereby making it possible to prevent the MS from retransmitting the ranging request message unnecessarily. That is, the present invention can prevent the MS from unnecessarily occupying resources, thereby making it possible to reduce a waste of resources.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method for performing a ranging process in a broadband wireless communication system, comprising the steps of:
transmitting a ranging request message from a mobile station to a base station; and
transmitting a ranging response message including cause information of a ranging status from the base station to the mobile station.

2. The method of claim 1, wherein the ranging process is one of an initial ranging process, a handover ranging process, and a location update ranging process.

3. The method of claim 1, wherein the ranging response message includes at least one of a mobile station identifier, ranging status information, and cause information of a ranging status.

4. The method of claim 3, wherein the ranging state information is a message parameter for informing the mobile station of a current ranging status.

5. The method of claim 3, wherein the ranging state information indicates one of a first value 'continue' for indicating a continuation of the ranging process, a second value 'abort' for requesting an abort of the ranging process, and a third value 'success' for indicating a success of the ranging process.

6. The method of claim 1, wherein the cause information is a message parameter for informing the mobile station of the cause of a ranging error.

7. The method of claim 1, wherein the cause information indicates one of a first value 'out of resource' for indicating a shortage of resources of a corresponding frequency allocation (FA), a second value 'busy' for indicating that another ranging process is being performed on the base station, a third value 'invalid parameter' for indicating that a parameter of the ranging request message is invalid, and a fourth value 'out of service' for indicating the service impossibility of the base station.

8. A communication method for a base station (BS) in a broadband wireless communication system, comprising the steps of:
determining if a ranging request message is received from a mobile station (MS);
determining ranging status information and cause information of the ranging status information upon receipt of the ranging request message;
generating a ranging response message including the ranging status information and the cause information; and
transmitting the generated ranging response message to the mobile station.

9. The communication method of claim 8, wherein the ranging request message is for one of an initial ranging process, a handover ranging process, and a location update ranging process.

10. The communication method of claim 8, wherein the ranging state information indicates one of a first value for indicating a continuation of the ranging process, a second value for requesting an abort of the ranging process, and a third value for indicating a success of the ranging process.

11. The communication method of claim 8, wherein the cause information indicates one of a first value 'out of resource' for indicating a shortage of resources of a corresponding frequency allocation (FA), a second value 'busy' for indicating that another ranging process is being performed on the base station, a third value 'invalid parameter' for indicating that a parameter of the ranging request message is invalid, and a fourth value 'out of service' for indicating the service impossibility of the base station.

12. A communication method for a mobile station (MS) in a broadband wireless communication system, comprising the steps of:
transmitting a ranging request message to a base station (BS); and
receiving a ranging response message including cause information of a ranging status from the base station.

13. The communication method of claim 12, wherein the ranging request message is for one of an initial ranging process, a handover ranging process, and a location update ranging process.

14. The communication method of claim 12, further comprising the steps of:
detecting ranging status information in the received ranging response message;
detecting the cause information of the corresponding ranging status if the ranging status information is 'continue'; and
correcting a parameter of the ranging request message if the cause information is 'invalid parameter'.

15. The communication method of claim 14, further comprising the steps of:
updating a ranging response wait timer if the cause information is 'busy'; and
determining if the ranging response message is received during the operation of the ranging response wait time.

16. The communication method of claim 12, further comprising the steps of:
detecting ranging status information in the received ranging response message;
detecting the cause information of the corresponding ranging status if the ranging status information is `abort';
searching for another base station if the cause information is 'out of service'; and
transmitting a ranging request message to the another base station.

17. The communication method of claim 16, further comprising the steps of:
searching for another frequency allocation (FA) of the base station if the cause information is 'out or resource' ; and
transmitting a ranging response message using the another FA.

18. The communication method of claim 12, further comprising the steps of:
detecting ranging status information in the received ranging response message;
performing the remaining network entry operation if the ranging status information is 'success'.

19. The communication method of claim 12, wherein the ranging state information indicates one of a first value for indicating a continuation of the ranging process, a second value for requesting an abort of the ranging process, and a third value for indicating, a success of the ranging process.

20. The communication method of claim 12, wherein the cause information indicates one of a first value 'out of resource' for indicating a shortage of resources of a corresponding frequency allocation (FA), a second value 'busy' for indicating that another ranging process is being performed on the base station, a third value 'invalid parameter' for indicating that a parameter of the ranging request message is invalid, and a fourth value 'out of service' for indicating the service impossibility of the base station.

21. A wireless network comprising a plurality of base stations for communicating with a plurality of mobile stations in a coverage area of the wireless network, wherein a first one of the plurality of base stations is operable to determine if a ranging request message is received from a first one of the plurality of mobile station, to determine ranging status information and cause information of the ranging status information upon receipt of the ranging request message, to generate a ranging response message including the ranging status information and the cause information, and to transmit the generated ranging response message to the mobile station.

22. The wireless network of claim 21, wherein the ranging request message is for one of an initial ranging process, a handover ranging process, and a location update ranging process.

23. The wireless network of claim 21, wherein the ranging state information indicates one of a first value for indicating a continuation of the ranging process, a second value for requesting an abort of the ranging process, and a third value for indicating a success of the ranging process.

24. The wireless network of claim 21, wherein the cause information indicates one of a first value 'out of resource' for indicating a shortage of resources of a corresponding frequency allocation (FA), a second value 'busy' for indicating that another ranging process is being performed on the first base station, a third value 'invalid parameter' for indicating that a parameter of the ranging request message is invalid, and a fourth value 'out of service' for indicating the service impossibility of the first base station.
